# EUROPÄISCHE PATENTSCHRIFT

(11) **EP 4 505 852 B1**
(45) Veröffentlichungstag und Bekanntmachung des Hinweises auf die Patenterteilung: **31.12.2025**
(21) Anmeldenummer: 23191051.4
(22) Anmeldetag: 11.08.2023
(51) Int. Cl.: A01B 35/24, A01B 39/18, A01B 61/04, A01M 21/02

(54) **VERFAHREN ZUM STRIEGELN, STRIEGELGERÄT UND ZUGFAHRZEUG MIT STRIEGELGERÄT**
METHOD TO HARROW BY TINES, WEEDING HARROW AND TRACTOR WITH WEEDING HARROW
PROCÉDÉ POUR ÉTRILLER, HERSE ÉTRILLE ET TRACTEUR AVEC HERSE ÉTRILLE

(43) Veröffentlichungstag der Anmeldung: 12.02.2025
(73) Patentinhaber: Thomas Hatzenbichler Agro-Technik GmbH, 9433 St. Andrä im Lavanttal (AT)
(72) Erfinder: KOGLEK, Daniel, 9422 Maria Rojach (AT)
(74) Vertreter: Beer & Partner Patentanwälte KG

(56) Entgegenhaltungen:
- EP-A1- 3 738 419
- AT-U2- 16 450
- DE-A1- 102020 002 718
- DE-A1- 102020 002 721
- US-A1- 2018 153 084

## Beschreibung

Die Erfindung betrifft ein Verfahren zum Entfernen von Unkraut durch Striegeln und ein Striegelgerät mit den Merkmalen der einleitenden Teile der unabhängigen Ansprüche. Die Erfindung betrifft auch ein Zugfahrzeug mit einem Striegelgerät.

Striegelgeräte (kurz "Striegel") sind beispielsweise aus EP 3 738 419 A1 bekannt.

Bei dem bekannten Striegelgerät sind mehrere Striegelzinken vorgesehen, die in einem Traggestell schwenkbar gelagert sind. Die Striegelzinken werden von als Federn wirkenden Pneumatikzylindern in ihre Wirkstellung vorgespannt. Beim Benützen des bekannten Striegelgerätes zum Entfernen von Unkraut schwenken die Striegelzinken je nach Bodenbeschaffenheit mehr oder weniger weit. Dabei ist die Kraft, mit welcher die Striegelzinken einwirken, so groß, dass nur Unkraut ausgerissen wird, Kulturpflanzen aber stehen bleiben.

Bei dem aus EP 3 738 419 A1 bekannten Striegelgerät wird dies erreicht, indem die Pneumatikzylinder über Druckregelventile mit Druckluft beaufschlagt werden. Wegen der Druckregelventile sind der Druck in den Pneumatikzylindern und die Kraft, mit welcher die Zinken einwirken (Zinkendruck), in allen Schwenklagen der Striegelzinken gleich groß.

Beim Striegeln mit Hilfe des bekannten Striegelgerätes ist angestrebt, dass die Striegelzinken nur Unkraut ausreißen, Kulturpflanzen aber stehen bleiben.

Dies ist nicht immer einfach möglich, weil beim Striegeln mit Hilfe des bekannten Striegelgerätes seitliche Bewegungen auftreten, sodass die Striegelzinken auch Kulturpflanzen beeinträchtigen, beispielsweise ausreißen, können, und weil alle Striegelzinken mit der selben Kraft ("Zinkendruck") einwirken.

WO 2020/173752 A1 (= US 11,423,662 B2) betrifft eine Vorrichtung zum Entfernen oder Vernichten von Unkraut, umfassend eine erste Bildaufnahmeeinrichtung zur Aufnahme eines ersten Bodenbildes, eine damit verbundene Datenverarbeitungseinheit und ein von der Datenverarbeitungseinheit angesteuertes, landwirtschaftliches Gerät, das zur punktuellen Entfernung oder Vernichtung von Unkraut ausgebildet ist. Die Datenverarbeitungseinheit ist dazu ausgeführt, das erste Bodenbild von der ersten Bildaufnahmeeinrichtung entgegenzunehmen, von zumindest einem verbundenen Endgerät manuell bestimmte Positionsdaten entgegenzunehmen, welche die Position von auf dem ersten Bodenbild durch einen oder mehrere Benutzer erkannten Unkrautpflanzen und/oder Kulturpflanzen und/oder Bodenstrukturen, beispielsweise Pflanzreihen, kennzeichnen und das landwirtschaftliche Gerät auf Grundlage der Positionsdaten derart anzusteuern, dass es Unkraut selektiv entfernt oder vernichtet.

Der Erfindung liegt die Aufgabe zugrunde, das eingangs erwähnte, bekannte Verfahren und das bekannte Striegelgerät so weiterzubilden, dass beim Striegeln Kulturpflanzen geschont werden.

Dies wird einerseits mit den Merkmalen des auf das Verfahren gerichteten, unabhängigen Anspruchs und anderseits mit den Merkmalen des auf das Striegelgerät gerichteten, unabhängigen Anspruchs erreicht.

Bevorzugte und vorteilhafte Ausgestaltungen der Erfindung sind Gegenstand der Unteransprüche.

Da bei der Erfindung der Zinkendruck so eingestellt wird, dass Striegelzinken, die ausschließlich auf Unkraut treffen, um dieses auszureißen, mit höherem Zinkendruck einwirken, wogegen Striegelzinken im Bereich von Kulturpflanzen mit kleinerem Zinkendruck einwirken, werden Kulturpflanzen geschont.

So wird gewährleistet, dass Unkraut wirksam entfernt wird (größerer Zinkendruck), Kulturpflanzen aber geschont werden (kleinerer Zinkendruck).

Dabei kann so vorgegangen werden, dass Striegelzinken, die beim Benützen des Striegelgerätes im Bereich von Kulturpflanzen einwirken, mit geringerem Zinkendruck arbeiten, indem den als Federn dienenden Pneumatikzylindern zugeordnete Druckregelventile so eingestellt sind, dass in den Pneumatikzylindern ein kleinerer Druck herrscht. Hingegen sind die Druckregelventile, die Pneumatikzylindern zugeordnet sind, welchen Striegelzinken zugeordnet sind, die im Bereich zwischen Kulturpflanzen einwirken, um Unkraut auszureißen, so eingestellt, dass in den Pneumatikzylindern ein höherer Druck herrscht, sodass ein größerer Zinkendruck auftritt.

In einer Weiterbildung der Erfindung kann vorgesehen sein, dass wenigstens eine Kamera vorgesehen ist, die erfasst, in welchem Bereich des Striegelgerätes Kulturpflanzen stehen, sodass aufgrund der so erfassten Bilder die Druckregelventile so eingestellt werden, dass im Bereich von Kulturpflanzen einwirkende Striegelzinken mit kleinerem Zinkendruck arbeiten.

Der Grundgedanke der vorliegenden Erfindung ist es, dass die Striegelzinken als federbelastete Pneumatikzylinder jedes einzelnen Striegelzinkens des Striegelgerätes wahlweise mit einem von wenigstens zwei unterschiedlichen Drücken beaufschlagt werden, und somit die Striegelzinken auf den Boden mit unterschiedlichen Kräften einwirken.

Beim Striegeln ist es angestrebt, möglichst früh zu striegeln. Dabei besteht die Möglichkeit, in einer Reihe von Kulturpflanzen - im Bereich einer zuvor festgelegten Bandbreite - einen geringeren Zinkendruck einzustellen, damit die Kulturpflanzen nicht ausgerissen werden. Dagegen wird zwischen den Reihen von Kulturpflanzen mit größerem Zinkendruck gearbeitet, sodass eine wirksame Unkrautbekämpfung durchgeführt wird.

Zur Steuerung des Striegelgerätes, um den Zinkendruck auf den jeweils gewünschten Wert einzustellen - geringerer Zinkendruck im Bereich von Kulturpflanzen, größerer Zinkendruck im Bereich von Unkraut - kann in das Striegelgerät eine Bandbreite (= Bereich um die Kulturpflanzen, in welchem mit geringerem Zinkendruck gearbeitet wird) eingegeben werden.

Dabei kann so vorgegangen werden, dass beim Anbauen der Kulturpflanzen Spuren, beispielsweise durch GPS, angelegt werden, die beim Striegeln verwendet werden, um den Bereich von Kulturpflanzen zu definieren, in welchem mit geringerem Zinkendruck gearbeitet wird.

Alternativ und ggf. auch zusätzlich besteht die Möglichkeit, Reihen von Kulturpflanzen mit Hilfe einer Kamera zu erfassen und so Bereiche zu definieren, auf die mit geringerem Zinkendruck eingewirkt wird.

Weitere Einzelheiten und Merkmale der Erfindung ergeben sich aus der nachstehenden Beschreibung von Ausführungsbeispielen anhand der Zeichnungen. Es zeigt:
- Fig. 1: in Draufsicht eine erste Ausführungsform eines Striegelgerätes in einem Feld von Kulturpflanzen,
- Fig. 2: eine zweite Ausführungsform eines Striegelgerätes in einem Feld von Kulturpflanzen,
- Fig. 3: in Seitenansicht drei Striegelzinken mit ihrer Halterung und
- Fig. 4: ein Pneumatikschema des erfindungsgemäßen Striegelgerätes.

Ein erfindungsgemäßes Striegelgerät 1 (Gerät zum Striegeln, "Striegel") umfasst ein Traggestell 2, das im gezeigten Ausführungsbeispiel mehrere Holme 3 aufweist. Die Holme 3 sind miteinander über im Traggestell 2 angeordnete Wangen 4 verbunden. Die Holme 3 sind in den Wangen 4 in Lagern verdrehbar gelagert, sodass die Holme 3 um zu ihren Längserstreckungen parallele Achsen verdreht werden können.

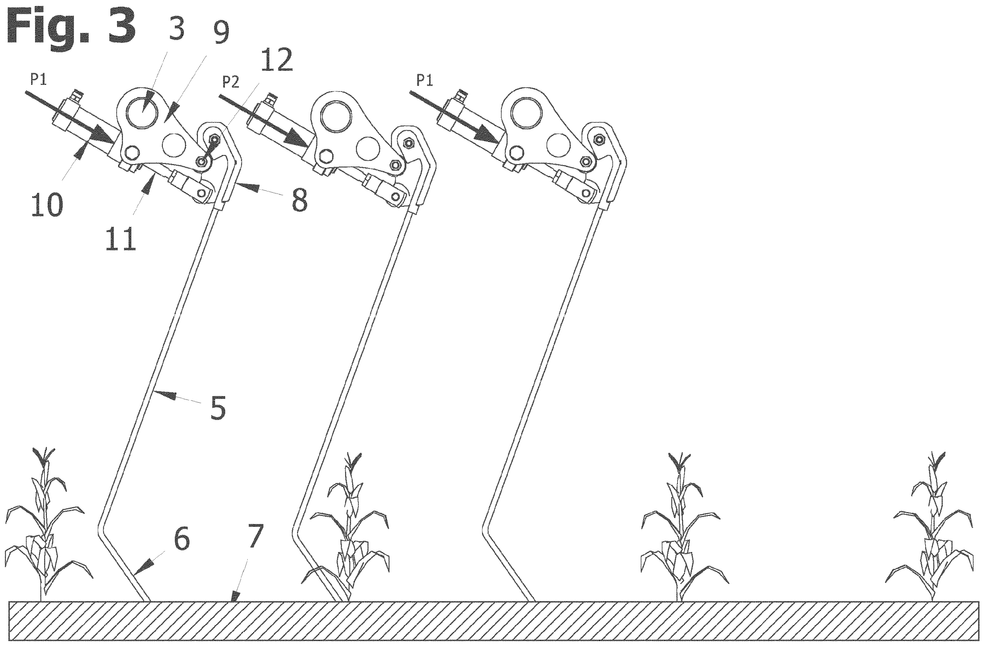

Zum Verdrehen der Holme 3 sind an diesen Arme befestigt, die miteinander über Kupplungsstangen verbunden sind. Die Verbindungen der freien Enden der Arme mit den Kupplungsstangen sind als Gelenke ausgebildet, sodass die Holme 3 durch Verstellen der Kupplungsstangen mit Hilfe eines Hydraulikzylinders verdreht werden können. So können an den Holmen 3 angebrachte Striegelzinken 5 aus einer nach unten gerichteten Wirkstellung (= Arbeitsposition, Fig. 3) in eine Bereitschaftsstellung (= Transportposition) nach oben verschwenkt werden.

Die aus Federstahl bestehenden Striegelzinken 5 haben abgewinkelte, freie Enden 6, wobei die abgewinkelten Enden 6 in den Boden 7 eingreifen, um Unkraut durch Ausreißen zu entfernen (vgl. Fig. 3).

Die Striegelzinken 5 sind an Hebeln 8 befestigt. Die Hebel 8 sind in Trägern 9 in Schwenklagern 12 verschwenkbar gelagert. Die Träger 9 sind an den Holmen 3 des Traggestells 2 befestigt. An jedem Träger 9 ist ein Pneumatikzylinder 10, der als pneumatische Feder wirkt, gelenkig abgestützt. Die Kolbenstange 11 des Pneumatikzylinders 10 ist mit dem Hebel 8, welcher die Striegelzinken 5 trägt, gelenkig verbunden. Jene Stelle, an der die Kolbenstange 11 des Pneumatikzylinders 10 mit dem Hebel 8 verbunden ist, besitzt Abstand vom Schwenklager 12 der Hebel 8.

Durch Beaufschlagen der Pneumatikzylinder 10 wirken diese als Feder und die Striegelzinken 5 werden in ihre, beispielsweise durch einen Anschlag, definierte Wirkstellung vorgespannt.

Die Pneumatikzylinder 10 werden über Druckregelventile 20 mit Druckluft beaufschlagt. So ist es möglich, den Zinkendruck, also jene Kraft, mit der die freien Enden 6 der Striegelzinken 5 auf den Boden 7 einwirken, in allen Schwenklagen der Striegelzinken 5 gleich groß (konstant) zu halten.

Die Striegelzinken 5 können verschwenken, wenn unebene Böden bearbeitet werden, wobei durch die Druckregelventile 20 sichergestellt ist, dass die Striegelzinken 5 in allen Schwenkstellungen der Striegelzinken 5 mit gleich großer Kraft (= gleich großer Zinkendruck) auf den Boden einwirken. So ist verhindert, dass die Striegelzinken 5 im Bereich von Erhebungen (Buckeln) des Bodens mit größerem Zinkendruck und im Bereich von Vertiefungen (Mulden) im Boden mit geringerem Zinkendruck auf den Boden einwirken. Solche Vertiefungen im Boden können beispielsweise Traktorspuren sein. Erhöhungen können beispielsweise Dämme im Bereich von Kartoffelpflanzen sein.

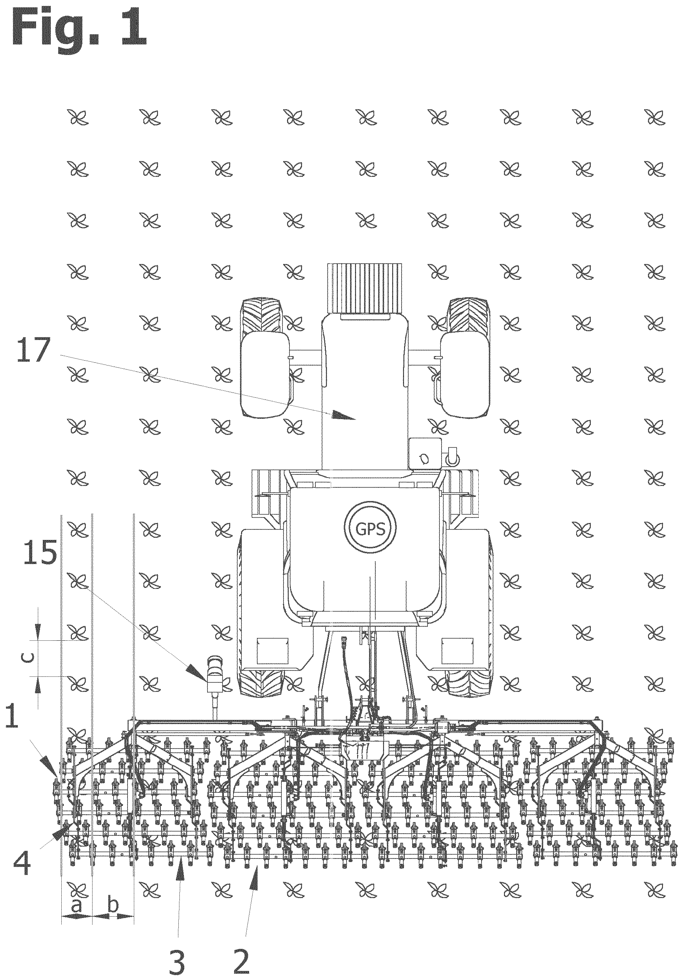

Bei der in Fig. 1 gezeigten Ausführungsform erfolgt das Einstellen des Zinkendrucks von Striegelzinken 5, die sich in Reihen von Kulturpflanzen befinden, aufgrund zuvor gespeicherter Spuren, die beim Anbau der Kulturpflanzen durch GPS-Koordinaten aufgezeichnet wurden. Durch Eingabe des Abstandes (b) zwischen zwei Reihen von Kulturpflanzen und einer Bandbreite (a) wird der Bereich festgelegt, in dem mit geringerem Zinkendruck gearbeitet wird, um Kulturpflanzen zu schützen.

Da der Abstand (b) zwischen Reihen von Kulturpflanzen und die Bandbreite (a) bekannt sind, ergibt sich ein Bereich zwischen den Reihen von Kulturpflanzen, in dem mit erhöhtem Zinkendruck gearbeitet werden kann, damit Unkraut effektiv entfernt (ausgerissen) wird.

Wenn - wie in der in Fig. 1 gezeigten Ausführungsform vorgesehen - in dem Striegelgerät 1 eine Kamera 15 und eine nachgeschaltete Bildverarbeitungssoftware installiert sind, werden Kulturpflanzen erkannt. Dies erlaubt es, dass in Bereichen zwischen den Reihen von Kulturpflanzen mit erhöhtem Zinkendruck gearbeitet wird, sodass zwischen Reihen von Kulturpflanzen ein effektives Entfernen von Unkraut durch die Striegelzinken erfolgt.

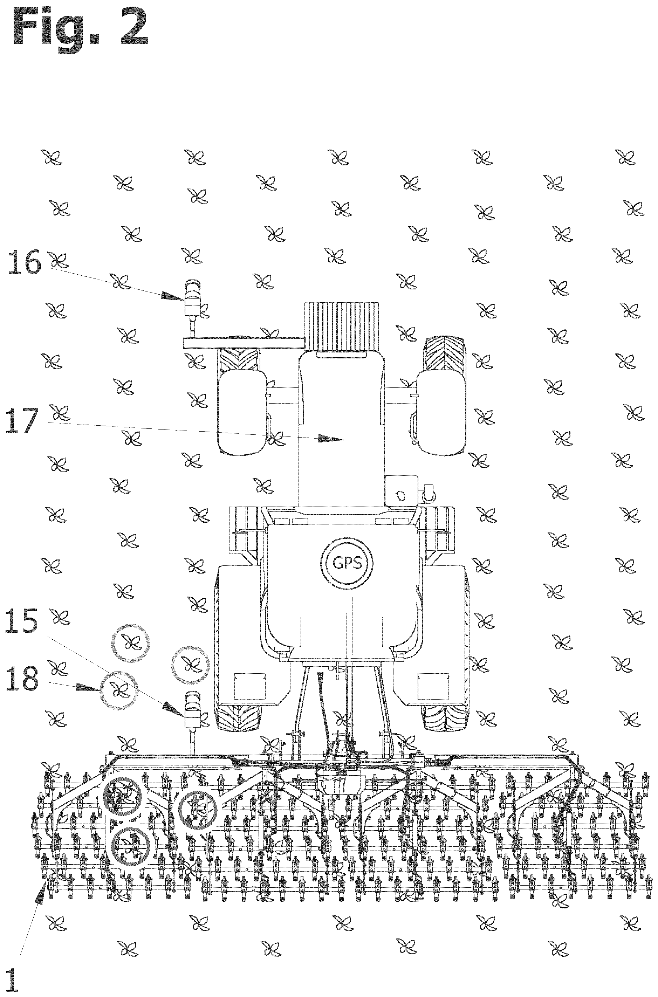

Bei der in Fig. 2 gezeigten Ausführungsform sind zwei Kameras 15 und 16 vorgesehen, nämlich eine Kamera 15 am Striegelgerät 1 und eine zweite Kamera 16 an der Vorderseite der Zugmaschine 17 (Traktor). Bei dieser Ausführungsform kann beispielsweise so gearbeitet werden, dass rings um von den Kameras 15 und 16 erkannten, einzelnen Kulturpflanzen ein beispielsweise kreisförmiger Bereich 18 festgelegt wird, in dem die Striegelzinken 5 mit geringerem Zinkendruck arbeiten, um die Kulturpflanzen zu schonen. Außerhalb des so festgelegten (kreisförmigen) Bereiches 18 kann mit erhöhtem Zinkendruck gearbeitet werden. An dem erfindungsgemäßen Striegelgerät 1 können auch mehr als zwei Kameras 15 angeordnet sein, um einen größeren Bereich abzudecken. Mit mehreren Kameras 15 auf dem Striegelgerät ist es - insbesondere bei der in Fig. 2 gezeigten Ausführungsform - möglich, auf jede einzelne Kulturpflanze zu reagieren, indem der Zinkendruck mit Hilfe der Druckregelventile 20 entsprechend eingestellt wird. Die Zahl von auf dem Striegel 1 angebrachten Kameras 15 kann insbesondere unter Berücksichtigen der Breite des Striegelgerätes 1 gewählt werden.

In Fig. 3 ist schematisch angedeutet, dass die Pneumatikzylinder 10 von zwischen Kulturpflanzenreihen einwirkenden Striegelzinken 5 mit erhöhtem Luftdruck P1 beaufschlagt werden (höherer Zinkendruck). Hingegen werden die Pneumatikzylinder 10 von Striegelzinken 5 im Bereich von Kulturpflanzen mit geringerem Luftdruck P2 beaufschlagt (kleinerer Zinkendruck), um Kulturpflanzen zu schonen.

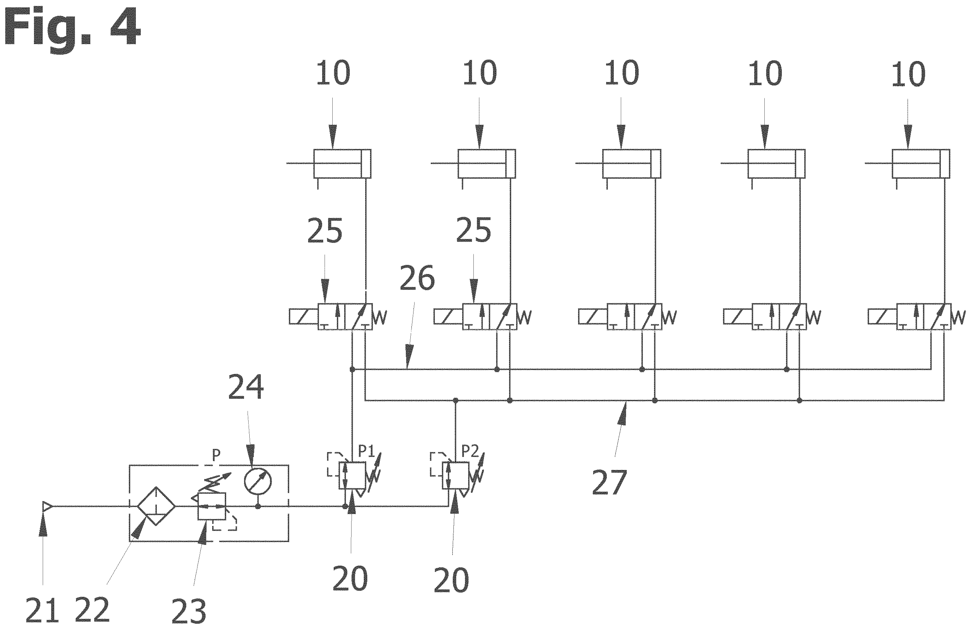

Das in Fig. 4 wiedergegebene Pneumatikschema des erfindungsgemäßen Striegelgerätes 1 umfasst eine Druckluftquelle 21, einen Wasserabscheider 22, eine Druckeinstellung 23 und ein Manometer 24. Die Druckluftquelle 21 kann beispielsweise ein auf der Zugmaschine 17 vorgesehener Drucklufterzeuger (z.B. ein Kompressor) sein.

In Anschluss an den Drucklufterzeuger 21 sind zwei proportionale Druckregelventile 20 ("Proportionalventile") vorgesehen, die auf unterschiedlich große Luftdrücke P1 und P2 eingestellt sind.

Vor den Pneumatikzylindern 10, die die Striegelzinken 5 als pneumatische Federn belasten, sind Magnetventile 25 vorgesehen, die Pneumatikzylinder 10 entweder mit der Druckluftleitung 26, in welcher der höhere Luftdruck P1 herrscht, oder mit der Druckluftleitung 27, in welcher der kleinere Luftdruck P2 herrscht, verbinden.

So ist es möglich, die Striegelzinken 5 und die ihnen zugeordneten Pneumatikzylinder 10 durch Druckluft mit einem Druck zu beaufschlagen, der dem gewünschten Zinkendruck - kleinerer Zinkendruck im Bereich von Kulturpflanzen, größerer Zinkendruck im Bereich von Unkraut, also im Bereich außerhalb von Kulturpflanzen - entspricht.

Im Rahmen der Erfindung besteht auch die Möglichkeit, jedem als Feder dienenden Pneumatikzylinder 10 ein Proportionalventil als Druckregelventil 20 vorzuschalten, sodass für jeden Striegelzinken 5, unabhängig von den anderen Striegelzinken 5, der jeweils gewünschte Zinkendruck durch Wahl des entsprechenden Druckes der dem Pneumatikzylinder 10 zugeführten Druckluft gewählt werden kann.

Zusammenfassend kann ein Ausführungsbeispiel der Erfindung wie folgt beschrieben werden:
Beim Entfernen von Unkraut durch Striegeln mit Hilfe eines Striegelgerätes 1, das entgegen Federkraft schwenkbare Striegelzinken 5 aufweist, wird die Kraft, mit der Striegelzinken 5 im Bereich von Kulturpflanzen einwirken kleiner gewählt als die Kraft, mit der Striegelzinken 5 im Bereich von Unkraut einwirken. Bei dem Striegelgerät 1 werden pneumatische Federn, die im Bereich von Kulturpflanzen einwirkenden Striegelzinken 5 zugeordnet sind, durch Druckluft mit kleinerem Druck beaufschlagt als pneumatische Federn, die Striegelzinken 5 zugeordnet sind, die im Bereich von Unkraut einwirken.

## Patentansprüche

1. Verfahren zum Entfernen von Unkraut durch Striegeln mit Hilfe eines Striegelgerätes (1), das entgegen Federkraft schwenkbare Striegelzinken (5) aufweist, wobei die freien Enden (11) der Striegelzinken (5) mit einstellbarer Kraft einwirken, **dadurch gekennzeichnet, dass** die Kraft, mit der Striegelzinken (5) im Bereich von Kulturpflanzen einwirken kleiner ist als die Kraft, mit der Striegelzinken (5) im Bereich von Unkraut einwirken.

2. Verfahren nach Anspruch 1, **dadurch gekennzeichnet, dass** der Bereich, insbesondere Reihen von Kulturpflanzen, in dem Striegelzinken (5) mit kleinerer Kraft einwirken, durch GPS-Koordinaten, die beim Anbau der Kulturpflanzen gespeichert wurden, erfasst wird.

3. Verfahren nach Anspruch 1, **dadurch gekennzeichnet, dass** der Bereich, insbesondere die Reihen von Kulturpflanzen, in dem Striegelzinken (5) mit kleinerer Kraft einwirken, durch wenigstens eine Kamera erfasst wird.

4. Verfahren nach Anspruch 3, **dadurch gekennzeichnet, dass** eine Kamera (15), die, bezogen auf die Arbeitsrichtung, vor dem Striegelgerät (1) und eine weitere Kamera (16), die auf einer vor dem Striegelgerät (1) angeordneten Zugmaschine (17) angeordnet ist, verwendet werden.

5. Verfahren nach einem der Ansprüche 1 bis 4, **dadurch gekennzeichnet, dass** Kulturpflanzen einzeln erfasst werden und dass ein Bereich (a, 18) neben erfassten Kulturpflanzen gewählt wird, in dem die Kraft, mit der Striegelzinken (5) einwirken, kleiner ist als außerhalb des gewählten Bereiches.

6. Striegelgerät (1), umfassend entgegen Federkraft schwenkbare Striegelzinken (5), wobei die Federn pneumatische Federn sind, die über Druckregelventile (20) mit Druckluft beaufschlagt sind, **dadurch gekennzeichnet, dass** das Striegelgerät weiterhin Mittel zum Durchführen des Verfahrens nach einem der Ansprüche 1 bis 5 umfasst, so dass pneumatische Federn, die im Bereich von Kulturpflanzen einwirkenden Striegelzinken (5) zugeordnet sind, durch Druckluft mit kleinerem Druck beaufschlagt sind als pneumatische Federn, die Striegelzinken (5) zugeordnet sind, welche im Bereich von Unkraut einwirken.

7. Striegelgerät nach Anspruch 6, **dadurch gekennzeichnet, dass** Druckregelventile (20) mit Hilfe einer Steuerung auf Grundlage von GPS-Koordinaten, die beim Anbau von Kulturpflanzen generiert wurden, gesteuert sind.

8. Striegelgerät nach Anspruch 6, **dadurch gekennzeichnet, dass** an diesem wenigstens eine Kamera (15) zum Erfassen von Kulturpflanzen vorgesehen ist.

9. Striegelgerät nach einem der Ansprüche 6 bis 8, **dadurch gekennzeichnet, dass** eine Druckluftquelle (21) vorgesehen ist, dass an die Druckluftquelle (21) wenigstens zwei Druckregelventile (20), die auf unterschiedliche große Drücke (P1 und P2) eingestellt sind, angeschlossen sind, und dass Ventile, insbesondere Magnetventile (25), zum Verbinden der pneumatischen Federn wahlweise mit dem einen oder dem anderen Druckregelventil (20) vorgesehen sind.

10. Striegelgerät nach einem der Ansprüche 6 bis 9, **dadurch gekennzeichnet, dass** jeder pneumatischen Feder ein Druckregelventil (20) vorgeschaltet ist.

11. Zugfahrzeug mit einem Striegelgerät nach Anspruch 9 oder 10, **dadurch gekennzeichnet, dass** die Druckluftquelle (21) ein auf einem Zugfahrzeug vorgesehener Drucklufterzeuger, insbesondere ein Kompressor, ist.

12. Zugfahrzeug mit einem Striegelgerät nach Anspruch 8 oder 10, **dadurch gekennzeichnet, dass**, bezogen auf die Arbeitsrichtung, wenigstens eine Kamera (15) an der Vorderseite des Striegelgerätes (1) angeordnet ist und eine weitere Kamera (16) an der Zugmaschine (17) für das Striegelgerät (1) angeordnet ist.

## Claims

1. Method for removing weeds by harrowing with the aid of a harrow device (1) which has harrow tines (5) that can be pivoted against spring force, wherein the free ends (11) of the harrow tines (5) act with adjustable force, **characterized in that** the force with which the harrow tines (5) act in the area of cultivated plants is smaller than the force with which the harrow tines (5) act in the area of weeds.

2. Method according to claim 1, **characterized in that** the area, in particular rows of cultivated plants, in which the harrow tines (5) act with less force is detected by GPS coordinates that were stored during the cultivation of the cultivated plants.

3. Method according to claim 1, **characterized in that** the area, in particular the rows of cultivated plants, in which the harrow tines (5) act with less force is detected by at least one camera.

4. Method according to claim 3, **characterized in that** a camera (15) which, relative to the working direction, is located in front of the harrow device (1) and a further camera (16) which is located on a tractor (17) arranged in front of the harrow device (1) are used.

5. Method according to one of claims 1 to 4, **characterized in that** cultivated plants are detected individually and that an area (a, 18) adjacent to detected cultivated plants is selected in which the force with which the harrow tines (5) act is smaller than outside the selected area.

6. Harrow device (1) comprising harrow tines (5) that can be pivoted against spring force, wherein the springs are pneumatic springs that are pressurized with compressed air via pressure control valves (20), **characterized in that** the harrow device further comprises means for carrying out the method according to one of claims 1 to 5, so that pneumatic springs associated with harrow tines (5) acting in the area of cultivated plants are supplied with compressed air at a lower pressure than pneumatic springs associated with harrow tines (5) acting in the area of weeds.

7. Harrow device according to claim 6, **characterized in that** pressure control valves (20) are controlled by means of a control system based on GPS coordinates generated during the cultivation of cultivated plants.

8. Harrow device according to claim 6, **characterized in that** at least one camera (15) is provided on it for detecting cultivated plants.

9. Harrow device according to one of claims 6 to 8, **characterized in that** a compressed air source (21) is provided, **in that** at least two pressure control valves (20) are connected to the compressed air source (21), which are set to differently large pressures (P1 and P2), and **in that** valves, in particular solenoid valves (25), are provided for connecting the pneumatic springs selectively to one or the other pressure control valve (20).

10. Harrow device according to one of claims 6 to 9, **characterized in that** a pressure control valve (20) is connected upstream of each pneumatic spring.

11. Tractor having a harrow device according to claim 9 or 10, **characterized in that** the compressed air source (21) is a compressed air generator provided on a tractor, in particular a compressor.

12. Tractor vehicle having a harrow device according to claim 8 or 10, **characterized in that**, relative to the direction of work, at least one camera (15) is arranged at the front of the harrow device (1) and a further camera (16) is arranged on the tractor (17) for the harrow device (1).

## Revendications

1. Procédé de désherbage par hersage à l'aide d'une herse-étrille (1) qui comporte des dents de herse (5) pouvant pivoter contre la force d'un ressort, dans lequel les extrémités libres (11) des dents de herse (5) agissent avec une force réglable, **caractérisé en ce que** la force avec laquelle des dents de herse (5) agissent dans la zone de plantes cultivées est plus faible que celle avec laquelle les dents de herse (5) agissent dans la zone de mauvaises herbes.

2. Procédé selon la revendication 1, **caractérisé en ce que** la zone, en particulier les rangs de plantes cultivées, dans laquelle les dents de herse (5) agissent avec une force plus faible est détectée à l'aide de coordonnées GPS enregistrées lors de la plantation des plantes cultivées.

3. Procédé selon la revendication 1, **caractérisé en ce que** la zone, en particulier les rangs de plantes cultivées, dans laquelle les dents de herse (5) agissent avec une force plus faible est détectée par au moins une caméra.

4. Procédé selon la revendication 3, **caractérisé en ce qu'**une caméra (15) disposée devant la herse-étrille (1) par rapport au sens de travail et une autre caméra (16) disposée sur un engin tracteur (17) disposé avant la herse-étrille (1) sont utilisées.

5. Procédé selon l'une des revendications 1 à 4, **caractérisé en ce que** des plantes cultivées sont détectées individuellement et **en ce qu'**est sélectionnée une zone (a, 18) proche des plantes cultivées détectées, dans laquelle la force avec laquelle les dents de herse (5) agissent est plus faible qu'en dehors de la zone sélectionnée.

6. Herse-étrille (1) comprenant des dents de herse (5) qui peuvent pivoter contre la force d'un ressort, dans laquelle les ressorts sont des ressorts pneumatiques qui reçoivent de l'air comprimé via des soupapes de régulation de la pression (20), **caractérisée en ce qu'**elle comprend en outre des moyens pour l'exécution du procédé selon l'une des revendications 1 à 5, de sorte que les ressorts pneumatiques affectés aux dents de herse (5) agissant dans la zone de plantes cultivées reçoivent de l'air comprimé sous une pression plus basse que les ressorts pneumatiques affectés aux dents de herse (5) agissant dans la zone de mauvaises herbes.

7. Herse-étrille selon la revendication 6, **caractérisée en ce que** les soupapes de régulation de la pression (20) sont commandées à l'aide d'une unité de commande sur la base de coordonnées GPS générées lors de la plantation de plantes cultivées.

8. Herse-étrille selon la revendication 6, **caractérisée en ce qu'**au moins une caméra (15) est prévue sur celle-ci pour détecter des plantes cultivées.

9. Herse-étrille selon l'une des revendications 6 à 8, **caractérisée en ce qu'**une source d'air comprimé (21) est prévue, **en ce qu'**au moins deux soupapes de régulation de la pression (20) réglées à des pressions différentes (P1 et P2) sont raccordées à la source d'air comprimé (21) et **en ce que** des soupapes, en particulier des électrovannes (25), sont prévues pour mettre les ressorts pneumatiques en communication sélectivement avec l'une ou l'autre soupape de régulation de la pression (20).

10. Herse-étrille selon l'une des revendications 6 à 9, **caractérisée en ce qu'**une soupape de régulation de la pression (20) est montée en amont de chaque ressort pneumatique.

11. Véhicule tracteur muni d'une herse-étrille selon la revendication 9 ou 10, **caractérisé en ce que** la source d'air comprimé (21) est un générateur d'air comprimé, en particulier un compresseur, prévu sur un véhicule tracteur.

12. Véhicule tracteur muni d'une herse-étrille selon la revendication 8 ou 10, **caractérisé en ce qu'**au moins une caméra (15) est disposée sur le côté avant de la herse-étrille (1) par rapport au sens de travail et une autre caméra (16) est disposée sur l'engin tracteur (17) pour la herse-étrille (1).
